# EUROPEAN PATENT SPECIFICATION

(11) **EP 0 783 119 B1**
(45) Date of publication and mention of the grant of the patent: **05.07.2000**
(21) Application number: 96402848.4
(22) Date of filing: 20.12.1996
(51) Int. Cl.: G02B 7/00, G02B 7/02, G11B 7/09, G11B 19/12, G11B 7/08, G11B 7/135

(54) **Biaxial actuator and optical disc apparatus**
Zweiachsige Positioniereinrichtung und Gerät für optische Platten
Positionneur biaxial et appareil à disque optique

(30) Priority: 27.12.1995 JP 35419895
(43) Date of publication of application: 09.07.1997
(73) Proprietor: SONY CORPORATION, Tokyo (JP)
(72) Inventor: Kawamura, Hiroshi, Shinagawa-ku, Tokyo (JP); Kubo, Takeshi, Shinagawa-ku, Tokyo (JP); Kanazawa, Takakiyo, Shinagawa-ku, Tokyo (JP); Sugawara, Yutaka, Shinagawa-ku, Tokyo (JP)
(74) Representative: Thévenet, Jean-Bruno

(56) References cited:
- EP-A- 0 712 122
- EP-A- 0 727 776
- EP-A- 0 742 552
- JP-A- 8 138 265
- US-A- 4 473 274
- US-A- 4 571 026
- PATENT ABSTRACTS OF JAPAN vol. 096, no. 009, 30 September 1996 & JP 08 138265 A (TOSHIBA CORP)

## Description

### BACKGROUND OF THE INVENTION

### Field of the Invention

This invention relates to a biaxial actuator in an optical pickup for recording and/or reproduction of the information for an optical recording medium, such as a compact disc. (CD), a CD-ROM or a magneto-optical disc, collectively termed an optical disc, and to an optical disc device. More particularly, it relates to a biaxial actuator and an optical disc device in which it is possible to reproduce optical discs of plural sorts having different disc formats.

### Description of the Related Art

Up to now, the optical pickup for reproducing an optical disc has been made up of a semiconductor laser element, as light emitting means, an objective lens for radiating the light from the semiconductor laser element to the optical disc, a biaxal actuator for holding the objective lens for movement in biaxial directions, a photodetector for detecting the return light from the optical disc and a servo circuit for driving the biaxial actuator in both the focusing and tracking directions based on a detection signal from the photodetector.

The biaxial actuator is made up of a lens holder supported for rotation about and for movement along a supporting shaft extending vertically relative to the signal recording surface of the optical disc, a single objective lens having its optical axis supported parallel to the supporting shaft, at a position offset from the supporting shaft of the lens holder, and a biaxial base carrying the supporting shaft, as disclosed in, for example, United States Patents 4,473,274 and 4,571,026.

With the biaxial actuator, a focusing coil is wound about the cylindrical outer peripheral surface of the lens holder, while a pair of tracking coils are mounted on the outer surface of the focusing coil. On the biaxial base is mounted a magnet for facing the focusing and tracking coils.

With the above-described optical pickup, the driving voltage driving-controlled by the tracking servo and the focusing servo from the servo circuit is supplied to the respective coils, so that the magnetic flux generated in the respective coils co-acts with the magnetic flux from the magnet. This lens holder is rotated about the supporting shaft, while being slid along the supporting shaft.

Thus, the objective lens, held in a position offset from the center of rotation of the lens holder, is moved tangentially with respect to the optical disc, as a result of rotation of the lens holder, whereby the objective lens is moved appropriately substantially relative to the tracking direction. Since the objective lens is moved axially by the sliding of the lens holder, the objective lens is moved appropriately relative to the focusing direction. Moreover, since the objective lens is moved axially by the sliding movement of the lens holder, the objective lens is moved appropriately in the focusing direction.

This enables the light radiated onto the optical disc to form a spot correctly on the signal recording surface of the optical disc. The return light reflected from the optical disc is incident on the photodetector such that the playback signal from the optical disc is detected based on the detection signal from the photodetector.

With an optical disc, it is contemplated to increase the capacity of the disc as a an auxiliary storage device for a computer or as package medium for speech or video information for recording signals by raising its recording density. If the recording density is raised, it is contemplated to increase the numerical aperture NA of the objective lens for recording/reproducing signal on or from the optical disc.

However, if the numerical aperture NA of the objective lens is increased, there is raised a problem that the allowance for disc tilt during signal readout is decreased.

That is, since the signal recording surface of the optical disc is formed via a transparent substrate having a pre-set thickness, such as 1.2 mm in the case of a compact disc, wavefront aberration is produced if the optical disc is tilted relative to the optical axis of the objective lens of the optical pickup, thus adversely affecting the reproduced signal (RF signal). The wave-front aberration significantly depends on the three-order coma aberration generated in proportion to the third power of the numerical aperture NA, first power of the skew angle θ and to the disc substrate thickness.

In the case of an optical disc of, for example, polycarbonate, with a disc substrate thickness of 1.2 mm, produced at low costs in large quantities, the skew angle θ is thought to be ¤0.5 to ¤1°, such that an imaging spot on the signal recording surface of the optical disc by the light beam radiated from the optical pickup becomes non-symmetrical due to the above-mentioned wave-front aberration.

The result is significantly increased inter-symbol interference in the recording signal to render it impossible to correctly reproduce the RF signals.

However, if the substrate thickness of the optical disc is reduced by exploiting the fact that this third-order coma aberration is proportionate to the disc substrate thickness, and the signal recording surface is provided via a transparent substrate 0.6 mm in thickness, the third-order coma aberration can be halved for thereby decreasing the wave-front aberration.

For realization of the high recording density of the optical disc as described above, it is effective to use an optical disc with the decreased substrate thickness, as described above. However, in this case, two standards having different disc structures as the optical disc, namely a standard for a thicker transparent substrate, such as 1.2 mm thick substrate, and a standard for a thinner transparent substrate, such as 0.6 mm thick substrate, become valid.

There is thought to be a demand for optical disc apparatus designed for recording/reproducing an optical disc and which is compatible with the above-described discs of different structures.

If a flat parallel plate having a thickness equal to t is inserted in a converging light path from the objective lens to the signal recording surface of the optical disc, the spherical aberration proportionate to t x (NA)4 is generated in connection with the thickness t and the numerical aperture NA. The objective lens is designed for canceling this spherical aberration.

The spherical aberration differs with difference in the disc substrate thickness. Thus, if an optical disc, such as a compact disc, a write-once optical disc or a magneto-optical disc, with a disc substrate thickness of 1.2 mm, according to a standard for a disc structure, is reproduced using an objective lens having a numerical aperture NA conforming to an optical disc substrate thickness of 0.6 mm conforming to the other standard for the disc structure, unforeseen fourth-order spherical aberration T x (NA)4 is produced due to the difference T in the disc substrate thickness, thus significantly exceeding the allowable range for the disc substrate thickness accommodated by the optical pickup. Thus a problem is raised that the signal cannot be detected correctly from the return light from the optical disc.

Thus a problem is raised that optical disc of plural different formats cannot be reproduced using the conventional biaxial actuator.

### SUMMARY OF THE INVENTION

It is therefore an object of the present invention to provide a biaxial actuator and an optical disc apparatus whereby the optical disc of any format can be correctly reproduced by switching to an associated objective lens.

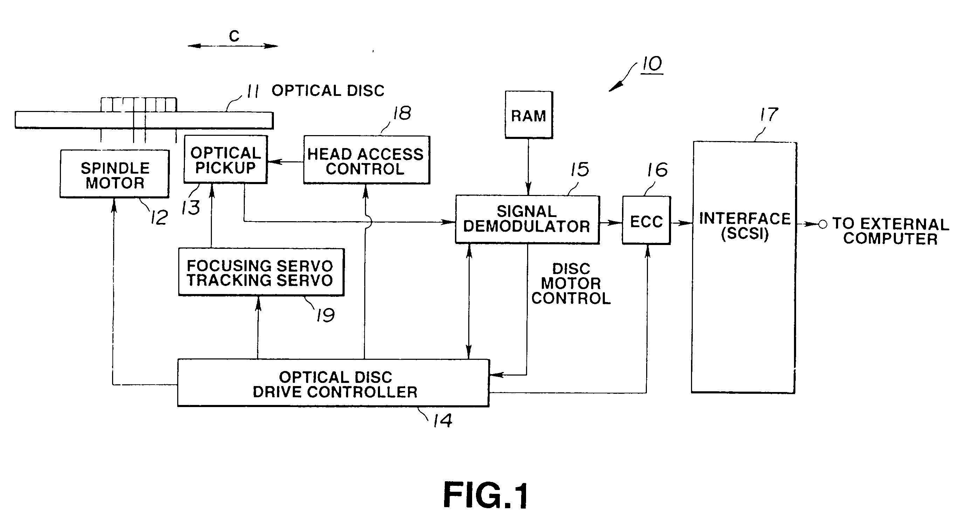

In one aspect, the present invention provides a biaxial actuator having a supporting shaft provided on a base plate at right angles with a signal recording surface of a recording medium, a lens holder supported for sliding along and for rotation about the supporting shaft, a focusing coil mounted on said lens holder for driving said lens holder in the focusing direction, a tracking coil mounted on said lens holder for driving the lens holder in the tracking direction, and magnetism generating means provided on the base plate, said magnetism generating means being arranged for facing the focusing coil and the tracking coil as for example described in US-A-4 473 274; characterised in that: a plurality of objective lenses are provided on said lens holder; said lens holder comprises an elongate portion, the distance between the ends of said elongate portion and said supporting shaft being greater than the distance between the side portions of the lens holder and the supporting shaft; and said tracking coil is located at the end portion of said elongate portion of the lens holder EP-A-0 727 776 being relevant only under EPC Art. 54(3) describes the tracking coils at the sides of the elongate lens holder (cf. fig. 1).

In another aspect, the present invention provides an optical disc apparatus for recording and/or reproducing an optical disc, comprising driving means for rotationally driving the optical disc; a light source for radiating laser light; an objective lens for radiating the laser light radiated by said light source to said optical disc; a biaxial actuator for movably supporting said objective lens in the focusing direction and in the tracking direction; photodetector means for detecting the return laser light radiated on and reflected from the optical disc; servo means for moving the objective lens supported by the biaxial actuator in the focusing direction and in the tracking direction based on a detection signal from said photodetector means; and moving means for moving said biaxial actuator along the radius of the optical disc; wherein said biaxial actuator is a biaxial actuator as described above; and said objective lenses being selectively moved in the optical path of laser light.

According to the present invention, any type of the optical disc can be correctly reproduced by appropriately switching to the associated objective lens.

### BRIEF DESCRIPTION OF THE DRAWINGS

Fig.1 is a block diagram showing an overall structure of an optical disc apparatus in which is assembled a biaxal actuator according to a preferred embodiment of the present invention.

Fig.2 is a plan view showing the structure of an optical pickup device in the optical disc apparatus shown in Fig.1.

Fig.3 is a longitudinal cross-sectional view as seen along an optical path from a semiconductor laser device through a raising mirror and a collimator lens to an objective lens in the optical pickup shown in Fig.2.

Fig.4 is a cross-sectional view of the biaxial actuator in the optical pickup shown in Fig.2.

Fig.5 is a plan view of the biaxial actuator in the optical pickup shown in Fig.2.

Fig.6 is a side view of the biaxial actuator in the optical pickup shown in Fig.2.

Fig.7 is a perspective view of the biaxial actuator in the optical pickup shown in Fig.2.

Fig.8 is an exploded perspective view of the biaxial actuator of Fig.7.

Fig.9 is a schematic plan view showing a magnetic circuit at a first neutral position of a lens holder of the biaxial actuator of Fig.7.

Fig.10 is a schematic plan view showing the magnetic circuit at the time of transition from a first neutral position to a second neutral position of a lens holder of the biaxial actuator.

Fig.11 is a side view showing the lens holder in the biaxial actuator at a first neutral position.

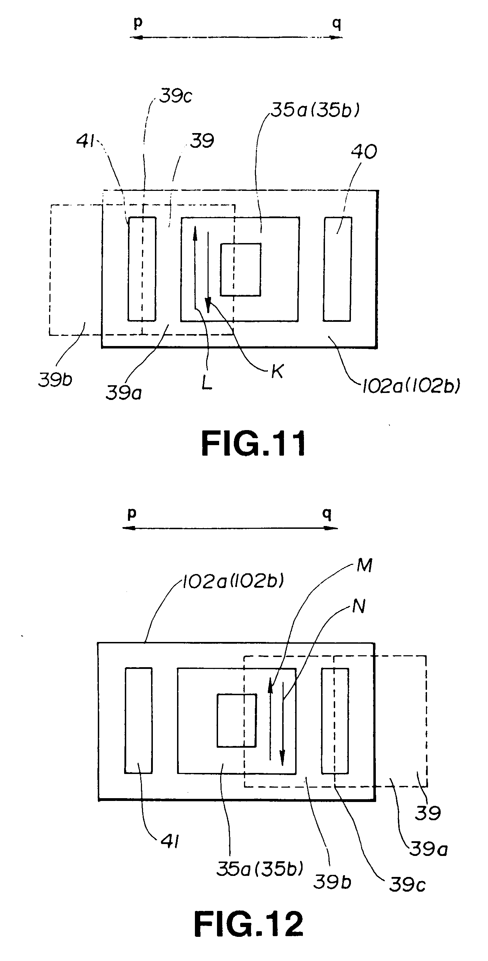

.Fig.12 is a side view showing the lens holder in the biaxial actuator at a second neutral position.

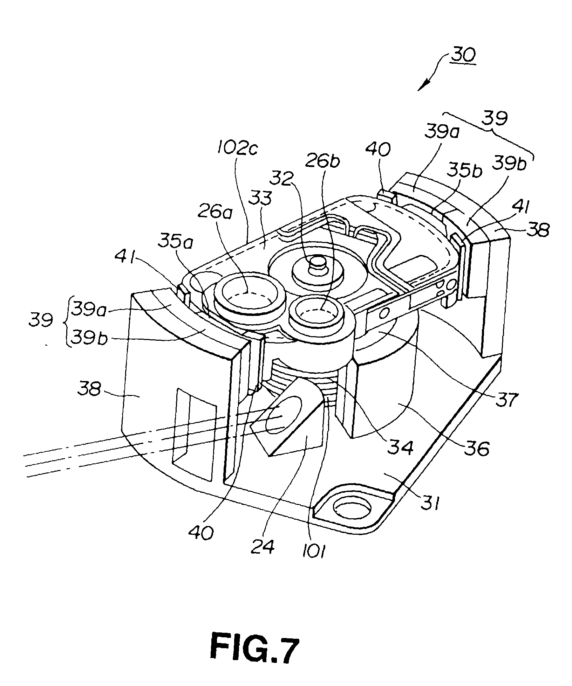

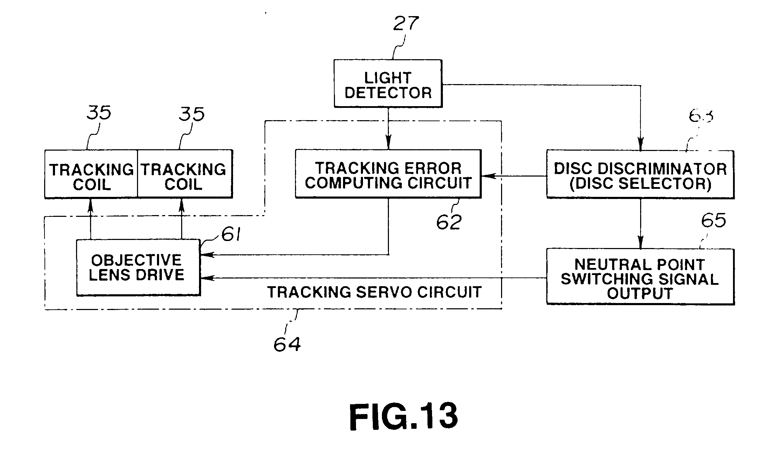

Fig.13 is a block diagram shown an electrical configuration for neutral point switching in the lens holder of the biaxial actuator shown in Fig.7.

### DESCRIPTION OF THE PREFERRED EMBODIMENTS

Referring to Figs.1 to 10, preferred embodiments of the present invention will be explained in detail.

The following embodiments represent preferred examples of execution of the invention and include various technically desirable limitations. However, unless specified to the contrary, the scope of the present invention is not limited to these illustrative embodiments.

Fig.1 shows an embodiment of an optical disc apparatus having assembled therein a biaxal actuator according to the present invention.

In Fig.1, an optical disc apparatus 10 includes a spindle motor 12, as driving means for rotationally driving an optical disc 11, and an optical pickup 13.

The spindle motor 12 is run in rotation at a pre-set rpm under driving control by an optical disc driving controller 14.

The optical pickup 13 radiates light to a signal recording surface of the rotating optical disc 11 for recording signals thereon. Also, the optical pickup 13 outputs playback signals derived from the return light to a signal demodulator 15 for detecting the return light from the signal recording surface.

The recording signal, demodulated by the signal demodulator 15, is corrected for errors by an error correction circuit 16 and sent to an external computer via interface 17. This enables the outside computer to accept the signals recorded on the optical disc 11 as playback signals.

To the optical pickup 13 is connected a head accessing controller 18 for moving the optical pickup 13 by, for example, track jump, as far as a pre-set recording track on the optical disc 11. To the optical pickup 13 is also connected a servo circuit 19 for moving a biaxial actuator in the focusing and tracking directions at the moved positions of the optical pickup. The biaxial actuator holds an objective lens of the optical pickup 13, as will be explained later.

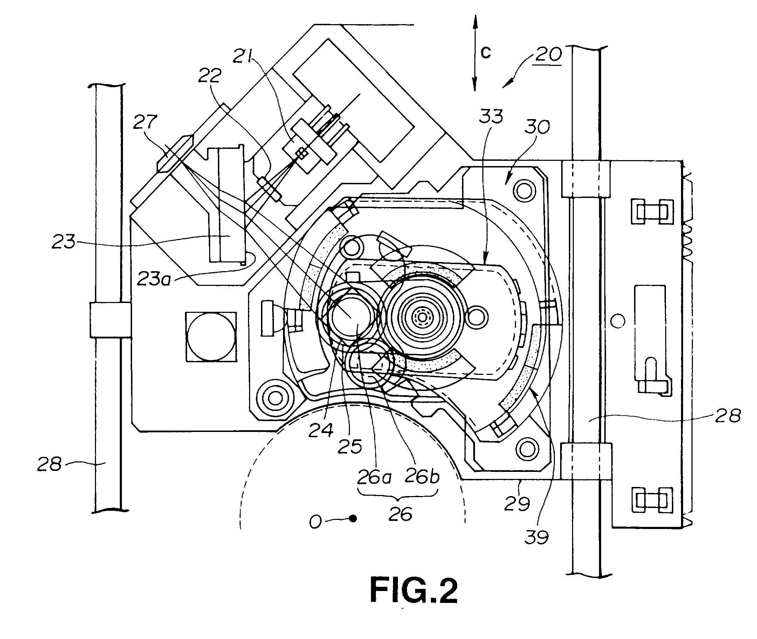

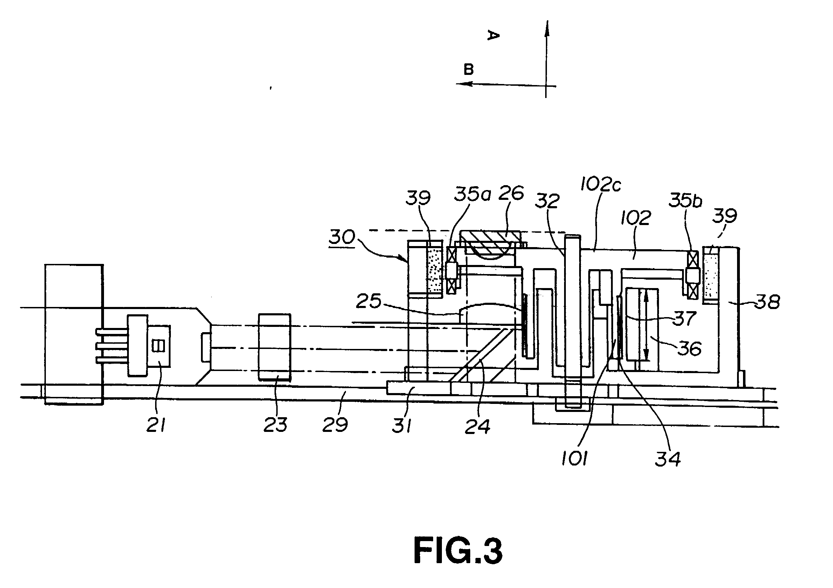

Figs.2 and 3 show an optical pickup assembled into the optical disc apparatus 10. Referring to Figs. 2 and 3, the optical pickup 20 is made up of a semiconductor laser device 21, as a light source, a grating 22, as light splitting means, a raising mirror 24, as optical path bending means, a collimator lens 25, an objective lens 26, a photodetector 27 and a biaxial actuator 30 for moving the objective lens 26 in two directions.

The semiconductor laser device 21 is a light emitting element exploiting the recombination light emission of a semiconductor and is used as a light source. The light beam outgoing from the semiconductor laser device 21 is conduced to the grating 22.

The grating 22 as light splitting means is a diffraction lattice for diffracting the incident light and is used splitting the light beam outgoing from the semiconductor laser device 21 into at least three light beams, namely a main beam consisting in the 0-order diffracted light beam and side beams consisting of a n first-order diffracted light beams.

The beam splitter 23 has its reflecting surface 23a inclined at 45° relative to the optical axis and separates the return light from the signal recording surface of the optical disc 11. That is, the light beam from the semiconductor laser device 21 is reflected on the reflecting surface 23a, while the return light is transmitted through the beam splitter 23.

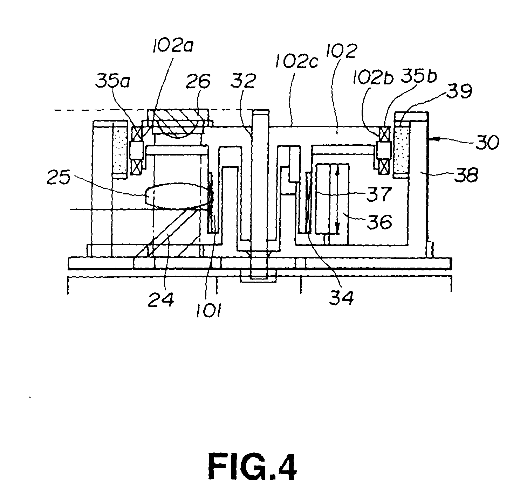

The raising mirror 24 is a light path bending mirror, as shown in Figs.3 and 4, and reflects the light beam reflected by the beam splitter 23 in the vertical direction indicated by arrow A in Fig.3, while reflecting the return light from the optical disc 11 in the horizontal direction as indicated by arrow B in Fig.3.

The raising mirror 24 has its direction of inclination set at 45° relative to the track direction of the optical disc 11 (tangential direction of the disc 11).

The collimator lens 25 is a convex lens, and collimates the light beam reflected from the raising mirror 24 into a parallel light beam, as shown in Figs.3 and 4.

The collimator lens 25 is arranged in an optical path bent by the raising mirror 24, that is in an optical path perpendicular to the signal recording surface of the optical disc.

Thus the distance between the beam splitter 23 and the raising mirror 24 is selected to be shorter, such that the biaxial actuator 30, optical pickup 20 and hence the optical disc apparatus may be reduced in size. Since the collimator lens 25 is arranged between the objective lens 26 and the raising mirror 24, a supporting shaft 32 is of a longer length, and hence the lens holder 33 may be held in stable state.

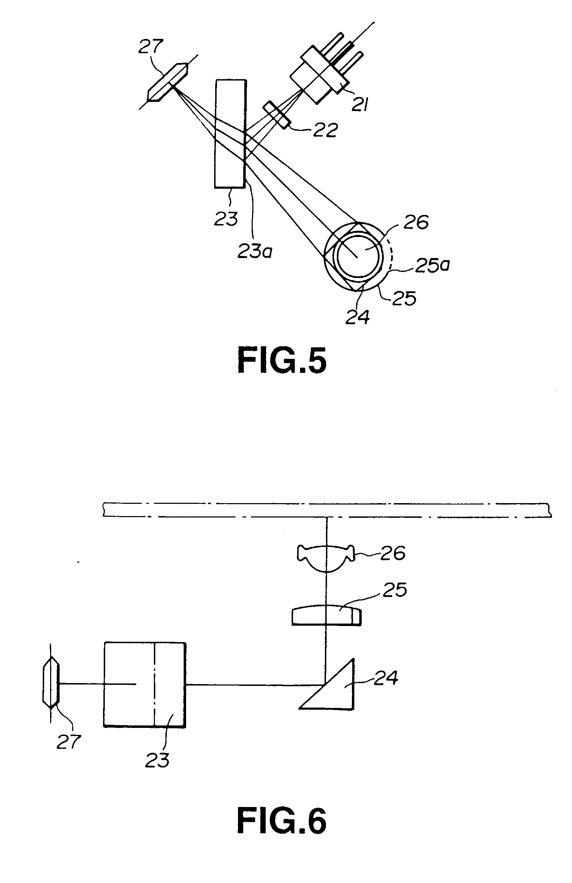

The collimator lens 25 has its lateral side edge towards the supporting shaft 32 cut off as indicated at 25a in Fig.5 for avoiding possible collision against the supporting shaft 32 and the neighboring elements, namely a focusing coil 34, a focusing yoke 36 or a focusing magnet 37. Such cut-off portion 25a is not obstructive to, for example, tracking servo since the optical disc 11 can have a sufficient length in the track direction of the optical disc 11.

The objective lens 26 is a convex lens, as shown in Figs.3 and 4, and forms an image of the collimated light from the collimator lens 25 on a desired track on the signal recording surface of the rotating optical disc 11.

The objective lens 26 is made up of two objective lenses 26a, 26b designed for accommodating two different sorts of the optical disc. In use, one of these optical discs is supported so as to be inserted into the light path by a lens holder as a movable part of the biaxal actuator 30.

The photodetector 27 is configured to have a light receiving portion for the return light beam transmitted through the beam splitter 23.

The semiconductor laser device 21, grating 22, beam splitter 23, raising mirror 24, collimator lens 25 and the photodetector 27 are fixedly arranged on a biaxial base 31 as a mounting portion of the biaxial actuator 30.

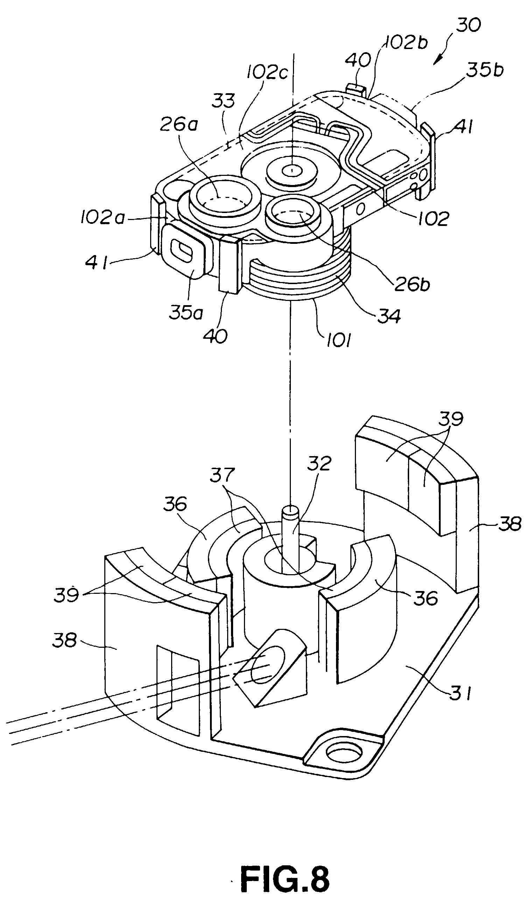

Figs.7 and 8 show the structure of the biaxial actuator 30.

In these figures, the biaxial actuator 30 includes the biaxial base 31 mounted with skew adjustment on an optical base 29 movably supported along the radius of the optical disc 11 (in a direction C in Fig.2) along a guide 28 by the optical pickup 20. The biaxial actuator 30 also includes a supporting shaft 32 extending vertically relative to the signal recording surface of the optical disc 11 on the biaxal base 31, and an oblong or rectangular lens holder 33 supported for axial movement and for rotation about the axis of the supporting shaft 32. The biaxial actuator 30 further includes two objective lenses 26a, 26b having optical axes held parallel to the supporting shaft at a pre-set distance from and at different angular positions relative to the rotary shaft of the lens holder.

Of the above two objective lenses, the objective lens 26a is a lens with a larger numerical aperture NA (such as with NA equal to 0.6) for a high recording density optical disc (the second sort of the optical disc) and is of a diameter larger than the objective lens 26b with a smaller value of NA (NA = 0.45)

In the lower half portion of the lens holder 33, there is formed a cylindrical portion 101 concentric with the supporting shaft 32, whereas, in the upper half portion of the lens holder 33, there is formed a flange 102 in the form of a flat plate having an upper surface 102c and lateral sides 102a, 102b. The upper surface 102a and the lateral sides 102a, 102b are parallel and normal to the signal surface of the optical disc 11, respectively.

A pair of objective lenses 26a, 26b are arranged on the upper surface 102c of the flange 102 of the lens holder 33. The objective lens 26b of the smaller diameter is arranged towards the center of rotation of the optical disc 11.

The focusing coil 34 is mounted on the cylindrical portion 101 on the lower half side of the lens holder 33, while a pair of tracking coils 35a, 35b are mounted on the lateral sides 102a, 102b symmetrical relative to the supporting shaft 32.

On the biaxial base 31 of the biaxal actuator 30, a pair of focusing yokes 36, 36 and a pair of tracking yokes 38, 38 are arranged at the positions not obstructing the light path of the light beam outgoing from the semiconductor laser device 21. The focusing yokes 36, 36 are arranged facing the focusing coil 34 from outside of the cylindrical portion 101 symmetrically relative to the supporting shaft 32, while the tracking yokes 38, 38 are arranged facing the tracking coils 35a, 35b from outside, respectively.

Inside of the focusing yokes 36, 36 are mounted a pair of focusing magnets 37, 37, whereas, inwardly of the tracking yokes 38, 38 are mounted a pair of tracking magnets 39, 39.

Thus the tracking coils 35a, 35b are arranged at both ends of the flange 102 of the lens holder 33 so that an electromagnetic driving force of equal magnitude acts on each end of the flange 102 of the elongated lens holder 33 rotated about the supporting shaft 32 as the center of rotation. This allows for smooth rotation of the lens holder 33.

The lens holder 33 of the present embodiment is arranged so that the raising mirror 24 is arranged side-by-side relative to the focusing coil and below the flange 102.

The focusing coil 34 is wound about the outer periphery of the cylindrical portion 101 separately from the tracking coils 35a, 35b and is mounted in proximity to the peripheral surface of the supporting shaft 32. That is, the focusing coil 34 is formed by electrically conductive wires wound at a small diameter in the horizontal direction to a compact size. Conversely, the focusing yoke 36 and the magnet 37 are arranged in proximity to the supporting shaft 32. This enables the focusing coil 34 to be reduced in overall size while enlarging the effective conductor length.

The tracking magnets 39 are constructed to opposite polarities in the left-and-right direction from the axial center of the length of the supporting shaft 32. For example, magnetic poles of the tracking magnets 39 are arranged as an S-pole 39a and an N-pole 39b clockwise relative to the supporting shaft 32.

Each of the tracking coils 35a, 35b has a winding portion extending parallel to the axis of the supporting shaft 32. On both lateral sides 102a, 102b of the winding portion are mounted magnetic members, such as iron pieces 40, 41 for extending along the axis of the supporting shaft 32 (the direction along the boundary of magnetized areas of the tracking magnets 39). This attracts the iron pieces 40 or 41 for facing a boundary area 39c of the two poles 39a, 39b of the tracking magnet 39 for moving the lens holder 33 to a first neutral point position in which the first objective lens 26a is inserted into the light path between the collimator lens 25 and the signal recording surface of the optical disc 11 or into a second neutral point position in which the second objective lens 26b is inserted into the light path.

The lateral sides 102a, 102b of the lens holder 33 are arranged so as to be symmetrical relative to the supporting shaft 32, while the tracking coils 35a, 35b and the iron pieces 40, 41 are arranged on the lateral sides 102a, 102b so as to be symmetrical relative to the supporting shaft 32 as center.

By the above configuration, the objective lenses 26a, 26b are selectively inserted into the optical path between the semiconductor laser device 21 and the signal recording surface of the optical disc 11.

The size and/or shape of the iron pieces 40, 41 can be optionally changed for varying the force of attraction by the tracking magnet 39 for appropriately setting the first-order resonant frequency f₀ of the biaxial actuator 30.

The lens holder 33 is thrust against a side of the supporting shaft 32, by the iron pieces 40, 41 being attracted to the tracking magnets 39, 39, for diminishing the wobbling otherwise produced due to the gap between the lens holder 33 and the supporting shaft 32.

In Fig.7, the lens holder 33 is shown to be at a position intermediate between the first and second neutral point positions.

If the objective lens 26a is inserted into the optical path, the iron piece 41 faces the boundary area 39c of the two magnet poles 39a, 39b of the facing tracking magnets 39. At this time, the lens holder 33 is at the first neutral point position and, by the magnetic flux flowing as indicated by arrow, the lens holder is kept at this first neutral point position. By allowing the driving current to flow through the tracking coils 35a, 35b in a direction indicated by arrow K or by arrow L in Fig.11, the lens holder 33 is wobbled about the supporting shaft 32, as indicated by arrows p and q in Fig.11, with the first neutral point as reference, for moving the objective lens 26a in the tracking direction which is in fact the tangential direction relative to the rotation of the lens holder 33, by way of performing the tracking.

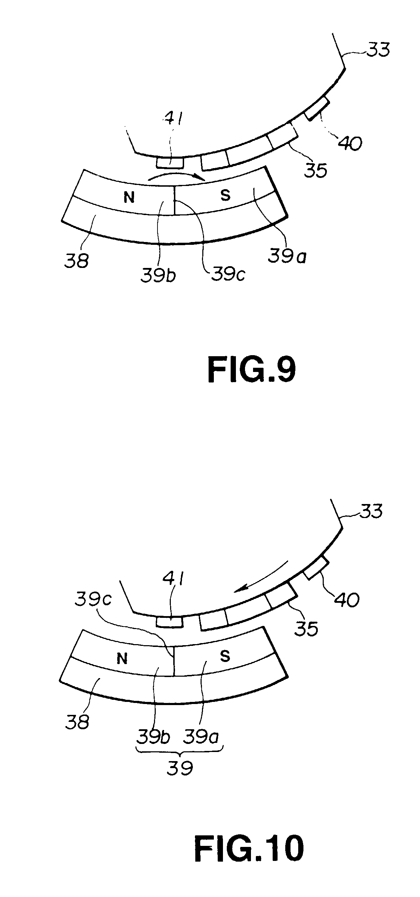

If a current larger than the current for usual tracking servo flows in the tracking coils 35a, 35b in a direction indicated by arrow L in Fig.11, the magnetic field from the tracking magnets 39 acts strongly in the direction of arrow p in Fig.11, as shown in Fig.10, so that the tracking coils 35a, 35b are moved for facing the magnetic pole 39b. This causes the other iron piece 40 to face the boundary area 39c of the magnetic poles 39a, 39b of the tracking magnets 39, as shown in Fig.12, so that the lens holder 33 is moved to the second neutral point position and hence the objective lens 26b is inserted into the optical path.

Fig.13 shows, in a block diagram, the configuration for neutral point switching as described above. In this figure, a disc discriminating unit 63 judges whether the optical disc as set is the optical disc of the first sort or the optical disc of the second sort. The photodetector 27 is connected to a disc discriminating unit 63. The disc discriminating unit 63 is connected to a neutral point switching signal outputting unit 65 and to a tracking error computing circuit 62. The neutral point switching signal outputting unit 65 and the tracking error computing circuit 62 are connected to an objective lens driving unit 61. The objective lens driving unit 61 is a driver for driving the tracking coils 35a, 35b and are connected to these coils.

The tracking error computing circuit 62 and the objective lens driving unit 61 are tracking servo circuits and are a portion of the servo circuit 19 of Fig.1.

The disc discriminating unit 63 acquires the ID readout result of the optical disc then set from, for example, the photodetector 27, and gives judgment as to whether the disc is the optical disc of the first sort or the optical disc of the second sort. Alternatively, the disc discriminating unit 63 acquires the result of detection from the photodetector 27 or other photodetectors, not shown, based on the difference in the amount of reflected light due to the difference in the substrate thickness of the optical disc as set for discriminating the disc sort. The photodetector 27 also measures the number of tracks for a pre-set radial distance of the optical disc as set and outputs the measured result to the disc discriminating unit 63. The disc discriminating unit 63 accordingly judges the disc sort and outputs the result of discrimination to the neutral point switching signal outputting unit 65.

Instead of automatically discriminating the sort of the optical disc as set, as described above, the user may manually select disc type via the selecting unit 63. In such case, the user outputs the information on the sort of the optical disc he or she has set to the neutral point switching signal outputting unit 65.

The neutral point switching signal outputting unit 65 outputs a signal to the objective lens driving unit 61 for switching between the objective lenses 26a and 26b depending on the optical disc sort. The objective lens driving unit 61 impresses a pre-set current or voltage to the tracking coils 35a, 35b for switching the objective lenses as described above.

The current or voltage supplied to the tracking coils 35a, 35b is pre-determined in association with the operation of transition between the first state in which one of the objective lenses 26a, 26b is at the neutral point position and the second state in which the other objective lens is at the neutral point position. The current or voltage is larger than that impressed by the objective lens driving unit 61 across the tracking coils 35a, 35b based on the output of the tracking error computing circuit 62 in case of the tracking servo operations. The neutral point switching is done by the fact that large current or voltage is applied to the tracking coils 35a, 35b so that the objective lens is moved by a larger distance than the the tracking stroke for tracking servo.

The result of discrimination of the disc discrimination unit 63 is also supplied to the tracking error computing circuit 62. Thus it becomes possible for the tracking error computing circuit 62 to select a detection method appropriate for a particular optical disc, such as a tracking error signal conforming to the optical disc sort, such as a tracking error signal by the three-spot method or a tracking error signal by the phase comparing method, and to find one of the signals by processing operations to send the signal thus found to the objective lens driving unit 61.

The optical disc apparatus 10, having assembled therein the biaxial actuator of the present embodiment, operates as follows:

For reproducing the high-density optical disc having the thickness of the transparent substrate of 0.6 mm (optical disc of the second sort), the lens holder 33 is at the first neutral point position, as shown in Fig.2, while the objective lens 26a is inserted into the optical path and the iron piece 41 mounted on the lens holder 33 faces the boundary area 39c of the tracking magnets 39.

The spindle motor 12 of the optical disc apparatus 10 is run in rotation for rotationally driving the optical disc 11. The optical pickup 20 is moved along the guide 28 along the radius of the optical disc 11 in a direction as indicated by arrow C in Fig.2 to an accessing position in which the optical axis of the objective lens 26a reaches the desired track position on the optical disc 11.

In the present embodiment, since the objective lens 26b of the smaller diameter among the objective lenses 26a, 26b is arranged towards the center of rotation of the optical disc, such disc does not prove to be hindrance to the spindle motor 12 so that the objective lens 26a is allowed to be moved to a position near the center of the optical disc 11.

In this state, the light beam from the semiconductor laser device 21 is split into three beams by the grating 22 in the optical pickup 20 and reflected by the reflecting surface 23a of the beam splitter 23 and by the raising mirror 24 to the optical disc 11. The light beam is further converted by the collimator lens 25 into a collimated light beam which then forms an image via objective lens 26a on the signal recording surface of the optical disc 11.

By the objective lens 26a, the numerical aperture NA is set to an appropriate value for the high-density optical disc, such as NA = 0.6, so that the image of the light beam is correctly formed on the signal recording surface of the optical disc 11.

The return light from the optical disc 11 is transmitted via the objective lens 26a, collimator lens 25 and the raising mirror 24 through the beam splitter 23 to form an image on the photodetector 27. This enables the recording signals of the optical disc 11 to be reproduced based on the detection signal of the photodetector 27.

From the detection signal from the photodetector 27, the tracking error signal and the focusing error signal are detected by the signal modulator 15, whereby the servo circuit 19 servo-controls the driving current to the focusing coil 34 and the tracking coil 35 via optical disc driving controller 14. This enables the driving current for the focusing coil 34 to be controlled so that the current flowing in the focusing coil 34 coacts with the magnetic field produced by the focusing magnet 37 and the focusing yoke 36 for moving the lens holder 33 along the supporting shaft 32 in a controlled manner by way of performing focusing.

On the other hand, the driving current flowing in a controlled manner in the tracking coils 35a, 35b in the direction of arrows K and L in Fig.11 coacts with the magnetic field produced by the tracking magnet 39 and the tracking yoke 38 for adjusting the wobbling of the lens holder 33 about the supporting shaft 32 with the first neutral point position as reference for adjusting movement of the objective lens 26a in the tracking direction by way of performing tracking.

For reproducing the usual optical disc having the thickness of the transparent substrate of 1.2 mm (optical disc of the second sort), a large current or voltage is impressed across the tracking coils 35a, 35b so that the objective lens is moved a distance larger than the tracking stroke for tracking servo in the direction indicated by arrow L in Fig.11, whereby the lens holder 33 is rotated about the supporting shaft 32 until the other iron piece 40 faces the boundary area 39c of the tracking coil 39, as described above. This realizes movement of the lens holder to the second neutral point position for inserting the objective lens 26b into the optical path.

The optical disc to be reproduced is discriminated by reading out the optical disc ID or by detecting the volume of the reflected light due to difference in substrate thickness in order to effect switching of the objective lenses. Obviously, the objective lens switching an also be done by manually actuating a switch.

Similarly, the spindle motor 12 of the optical disc apparatus 10 is rotated for running the optical disc 11 in rotation. The optical disc 20 is moved along the radius of the disc 11 along the guide 28 whereby the optical axis of the objective lens 26b is moved up to the desired track on the optical disc 11 for accessing.

In this state, the light beam from the semiconductor laser 21 is split by the grating 22 into three light beams before being reflected on the reflecting surface 23a of the beam splitter 23 and then on the raising mirror 24 towards the optical disc 11. The light beam is then collimated by the collimated lens into a collimated light beam which then forms an image via objective lens 26b on the signal recording surface of the optical disc 11.

Since the numerical aperture NA is set by the objective lens 26b to an appropriate value of, for example, NA = 0.45, the the light beam forms an image correctly on the signal recording surface of the optical disc 11.

The return light from the optical disc 11 is again transmitted via objective lens 26b, collimator lens 25 and raising mirror 24 through the beam splitter 23 to form an image on the photodetector 27. This reproduces the recorded signal on the optical disc 11 depending on the detection signal of the photodetector 27.

At this time, the tracking error signal and the focusing error signal are detected from the detection signal from the photodetector 27 by the signal demodulator 15 whereby the servo circuit 19 servo-controls the driving current to the focusing coil 34 and the tracking coil 35b. By controlling the driving current to the focusing coil 34, the current flowing through the focusing coil 34 co-acts with the magnetic field produced by the focusing magnet 37 and the focusing yoke 36 for adjusting movement of the lens holder 33 along the supporting shaft 32 in the focusing direction by way of performing focusing. On the other hand, the current flowing by controlling the driving current of the tracking coils 35a, 35b in the direction indicated by arrows M and N in Fig.12 co-acts with the magnetic field produced by the tracking magnet 39 and the tracking yoke 38 for adjusting the oscillation of the lens holder 33 about the supporting shaft 45, with the second neutral point position as a reference, for adjusting movement of the objective lens 26a in the tracking direction, which is in fact the tangential direction, by way of performing tracking.

When again moving the lens holder 33 from the second neutral point position to the first neutral point position, the current or voltage value impressed across the tracking coils 35a, 35b is set in the direction of arrow M in Fig.12 so that the lens holder is moved a distance larger than the tracking stroke for tracking servo. This causes the current flowing in the tracking coils 35a, 35b to act strongly on the magnetic field produced by the tracking magnet 39 and the tracking yoke 38 so that the lens holder 33 is rotated about the supporting shaft 32 and hence the iron piece 41 mounted on the lens holder 33 faces the boundary area 39c of the tracking coil 39. This moves the lens holder to the first neutral point position for inserting the objective lens 26a into the optical path.

In the above-described embodiment, the lens holder of the biaxial actuator is wobbled about the supporting shaft for inserting one of the objective lenses into the optical path so that the objective lens corresponding to the optical disc to be used for reproduction is used. Since this enables the light beam from the light source to be formed correctly on the signal recording surface of the optical disc via objective lens, the return light from the signal recording surface of the optical disc is incident on the photodetector for realizing optimum signal reproduction of the plural sorts of the optical discs.

In addition, since the operation of inserting the objective lenses into the optical path is realized by the wobbling of the lens holder about the supporting snaft, produced by the co-action of the tracking coils provided on the lens holder with the stationary tracking magnet, objective lens switching appropriate for the optical disc being reproduced may be realized by a simplified structure and at a low cost.

Also, since the lens holder 33 of the above-described embodiment of the optical pickup device is constructed so that the raising mirror 24 is arrayed side-by-side relative to the focusing coil and below the flange 102, the pickup device itself may be reduced in thickness.

In the above-described embodiments of the optical disc apparatus 10 and the biaxial actuator 30, the magnetic poles 39a, 39b of the tracking magnet 39 are set to S and N, respectively. However, this pole arrangement may also be reversed, in which case the current flowing in the tracking coils 35a, 35b may be reversed in direction for effecting tracking of the lens holder 33 to the first or second neutral point position.

Moreover, in the above-described embodiments of the optical disc apparatus 10 and the biaxial actuator 30, the objective lenses 26a, 26b are held by the lens holder. However, it is also possible to provide three or more objective lenses which may be selectively inserted into the optical path based on the interaction between the tracking coil 35 and the tracking magnet 39.

## Claims

1. A biaxial actuator comprising:
a supporting shaft (32) provided on a base plate (31) at right angles with a signal recording surface of a recording medium;
a lens holder (33) supported for sliding along and for rotation about said supporting shaft;
a focusing coil (34) mounted on said lens holder for driving said lens holder in the focusing direction;
a tracking coil (35) mounted on said lens holder for driving the lens holder in the tracking direction; and
magnetism generating means (36-39) provided on said base plate, said magnetism generating means being arranged for facing said focusing coil and said tracking coil; characterised in that:
a plurality of objective lenses (26a,26b) are provided on said lens holder;
said lens holder (33) comprises an elongate portion (102), the distance between the ends (102a,102b) of said elongate portion and said supporting shaft (32) being greater than the distance between the side portions of the lens holder and the supporting shaft (32); and
said tracking coil (35) is located at the end portion of said elongate portion of the lens holder.

2. A biaxial actuator according to claim 1, wherein said magnetism generating means includes a magnet (39) arrayed facing the tracking coil (35) and having a curved surface portion facing said tracking coil (35).

3. The biaxial actuator as claimed in claim 2, wherein said lens holder has at least two magnetic members (40,41) in the vicinity of said tracking coil (35) for being attracted by said magnet (39).

4. The biaxial actuator as claimed in claim 2 or 3, wherein there are provided a plurality of neutral positions relative to the rotating direction of the lens holder (33) in association with the operative positions in which the respective objective lenses are inserted into the optical path, the neutral positions of the lens holder are switched by the interaction of the tracking coil (35) and the magnet (39), and wherein said objective lenses are adapted for being selectively inserted into the optical path of a laser beam.

5. The biaxial actuator as claimed in claims 2, 3 or 4, wherein the magnet (39) is magnetised to alternate S and N poles (39a,39b).

6. A biaxial actuator according to any previous claim, wherein at least a pair of objective lenses (26a,26b) having different values of numerical aperture are mounted on said lens holder (33), said objective lenses (26a,26b) are arranged at different angular positions on a concentric circle relative to said supporting shaft (32) and wherein the objective lenses are selectively arrayed in an optical path of the laser light.

7. The biaxial actuator as claimed in any previous claim, wherein said magnetism generating means includes a further magnet (37) arrayed facing the focusing coil (34).

8. The biaxial actuator as claimed in any previous claim, wherein the lens holder (33) comprises a flange portion (102), constituting said elongate portion, and a cylindrical surface (101) for mounting the focusing coil (34), said flange portion having an upper surface (102c) for mounting said objective lenses (26a,26b) and a lateral surface (102a,102b) for mounting said tracking coil (35).

9. The biaxial actuator as claimed in any previous claim, wherein:
the lens holder (33) has a first portion (102c) facing the recording medium and adapted for arraying the plurality of objective lenses (26a,26b), a second portion (101) for mounting the focusing coil (34) and a third portion (102a,102b) for mounting the tracking coil (35);
a plurality of said objective lenses are mounted on said first portion (102c) at the same distance from said supporting shaft (32);
said focusing coil (34) is mounted on said second portion (101) of the lens holder for driving the lens holder in the focusing direction;
said tracking coil (35) is mounted on said third portion (102a,102b) of the lens holder for driving the lens holder in the tracking direction;
a magnet (39) is mounted on said base plate (31) for facing said tracking coil (35);
a further magnet (37) is mounted on said base plate for facing said focusing coil (34); and
said objective lenses (26a,26b) arranged on said lens holder are adapted for being alternatively inserted in the optical path of a laser beam.

10. The biaxial actuator as claimed in claim 9, wherein there is provided a magnetic piece (40,41) in the vicinity of the tracking coil mounted on said lens holder, said magnet (39) is divided by a dividing line (39c) parallel to said supporting shaft for being magnetised to alternate S and N poles and wherein the lens holder is held about a position in which the magnetic piece (40,41) faces the division line (39c) of the second magnet as centre.

11. An optical disc apparatus for recording and/or reproducing an optical disc, comprising:
driving means for rotationally driving the optical disc;
a light source for radiating laser light;
an objective lens for radiating the laser light radiated by said light source to said optical disc;
a biaxial actuator for movably supporting said objective lens in the focusing direction and in the tracking direction;
photodetector means for detecting the return laser light radiated on and reflected from the optical disc;
servo means for moving the objective lens supported by the biaxial actuator in the focusing direction and in the tracking direction based on a detection signal from said photodetector means; and
moving means for moving said biaxial actuator along the radius of the optical disc;
wherein said biaxial actuator is a biaxial actuator according to any of claims 1 to 10; and
said objective lenses being selectively moved in the optical path of laser light.

12. The optical disc apparatus as claimed in claim 11, further comprising discriminating means (63) for discriminating the disc sorts for switching between the objective lenses (26a,26b) for selecting the objective lens in use depending on a discrimination signal from said discriminating means.

## Patentansprüche

1. Biaxiale Betätigungsvorrichtung mit einer Tragwelle (32), die an einer Grundplatte (31) unter rechten Winkeln zu einer Signalaufzeichnungsfläche eines Aufzeichnungsträgers vorgesehen ist,
mit einem Linsenhalter (33), der zum Verschieben längs der betreffenden Tragwelle und zur Drehung um diese getragen ist, mit einer Fokussierungsspule (34), die an dem betreffenden Linsenhalter zum Antrieb des Linsenhalters in der Fokussierungsrichtung angeordnet ist,
mit einer Spurnachlaufspule (35), die an dem Linsenhalter zu dessen Antrieb in der Spurnachlaufrichtung angeordnet ist, und mit einer an der genannten Grundplatte vorgesehenen Magnetismus-Erzeugungseinrichtung (36-39), die derart angeordnet ist, dass sie der Fokussierungsspule und der Spurnachlaufspule zugewandt ist,
**dadurch geknnzeichnet,**
dass eine Vielzahl von Objektivlinsen (26a, 26b) an dem genannten Linsenhalter vorgesehen ist,
dass der genannte Linsenhalter (33) einen länglichen Teil (102) aufweist,
dass der Abstand zwischen den Enden (102a, 102b) des betreffenden länglichen Teiles und der genannten Tragwelle (32) größer ist als der Abstand zwischen den Seitenteilen des Linsenhalters und der Tragwelle (32)
und dass die Spurnachlaufspule (35) an dem Endteil des länglichen Teiles des Linsenhalters angeordnet ist.

2. Biaxiale Betätigungsvorrichtung nach Anspruch 1, wobei die Magnetismus-Erzeugungseinrichtung einen derart angeordneten Magneten (39) enthält, dass dieser der Spurnachlaufspule (35) zugewandt ist und einen gekrümmten Flächenteil aufweist, der zu der betreffenden Spurnachlaufspule (35) hin gewandt ist.

3. Biaxiale Betätigungsvorrichtung nach Anspruch 2, wobei der Linsenhalter zumindest zwei magnetische Glieder (40, 41) in der Nähe der genannten Spurnachlaufspule (35) für ein Anziehen durch den genannten Magneten (39) aufweist.

4. Biaxiale Betätigungsvorrichtung nach Anspruch 2 oder 3, wobei eine Vielzahl von neutralen Positionen in bezug auf die Drehrichtung des Linsenhalters (33) in Verbindung mit den Betriebspositionen vorgesehen ist, in denen die betreffenden Objektivlinsen in den optischen Weg eingeführt sind, wobei die neutralen Positionen des Linsenhalters durch Zusammenwirken der Spurnachlaufspule (35) und des Magneten (39) umgeschaltet werden und wobei die genannten Objektivlinsen imstande sind, selektiv in die optische Bahn eines Laserstrahls eingeführt zu werden.

5. Biaxiale Betätigungsvorrichtung nach Anspruch 2, 3 oder 4, wobei der Magnet (39) so magnetisiert ist, dass sich S- und N-Pole (39a, 39b) abwechseln.

6. Biaxiale Betätigungsvorrichtung nach irgendeinem vorhergehenden Anspruch, wobei zumindest ein Paar von Objektivlinsen (26a, 26b) mit unterschiedlichen Werten der numerischen Apertur an dem genannten Linsenhalter (33) angeordnet sind, wobei die betreffenden Objektivlinsen (26a, 26b) in unterschiedlichen Winkelpositionen auf einem konzentrischen Kreis relativ zu der genannten Tragweile (32) angeordnet sind und wobei die Objektivlinsen selektiv in einer optischen Bahn des Laserlichts angeordnet sind.

7. Biaxiale Betätigungsvorrichtung nach irgendeinem vorhergehenden Anspruch, wobei die genannte Magnetismus-Erzeugungseinrichtung einen weiteren Magneten (37) enthält, der derart angeordnet ist, dass er der Fokussierungsspule (34) zugewandt ist.

8. Biaxiale Betätigungsvorrichtung nach irgendeinem vorhergehenden Anspruch, wobei der Linsenhalter (33) einen Flanschteil (102), der den genannten länglichen Teil bildet, und eine zylindrische Fläche (101) zur Anbringung der Fokussierungsspule (34) aufweist,
wobei der genannte Flanschteil eine obere Fläche (102c) zur Anbringung der genannten Objektivlinsen (26a, 26b) und eine Querfläche (102a, 102b) zur Anbringung der genannten Spurnachlaufspule (35) aufweist.

9. Biaxiale Betätigungsvorrichtung nach irgendeinem vorhergehenden Anspruch, wobei der Linsenhalter (33) einen ersten Teil (102c), der dem Aufzeichnungsträger zugewandt ist und der imstande ist zur Anordnung der Vielzahl der Objektivlinsen (26a, 26b), einen zweiten Teil (101) zur Anbringung der Fokussierungsspule (34) und einen dritten Teil (102a, 102b) zur Anbringung der Spurnachlaufspule (35) aufweist,
wobei eine Vielzahl der genannten Objektivlinsen an dem genannten ersten Teil (102c) in derselben Entfernung von der genannten Tragwelle (32) angebracht ist,
wobei die genannte Fokussierungsspule (34) an dem genannten zweiten Teil (101) des Linsenhalters zum Antrieb des Linsenhalters in der Fokussierungsrichtung angebracht ist,
wobei die genannte Spurnachlaufspule (35) an dem genannten dritten Teil (102a, 102b) des Linsenhalters zum Antrieb des Linsenhalters in der Spurnachlaufrichtung angebracht ist,
wobei ein Magnet (39) an der genannten Grundplatte (31) derart angebracht ist, dass er der genannten Spurnachlaufspule (35) zugewandt ist,
wobei ein weiterer Magnet (37) an der genannten Grundplatte derart angebracht ist, dass er der genannten Fokussierungsspule (34) zugewandt ist,
und wobei die genannten Objektivlinsen (26a, 26b), die an dem genannten Linsenhalter angeordnet sind, geeignet sind für die alternative Einführung in die optische Bahn eines Laserstrahls.

10. Biaxiale Betätigungsvorrichtung nach Anspruch 9, wobei ein magnetisches Teil (40, 41) in der Nähe der an dem genannten Linsenhalter angebrachten Spurnachlaufspule vorgesehen ist, wobei der genannte Magnet (39) durch eine parallel zu der genannten Tragwelle verlaufende Trennlinie (39c) für eine solche Magnetisierung aufgeteilt ist, dass S- und N-Pole sich abwechseln,
und wobei der Linsenhalter um eine Position gehalten wird, in der das magnetische Teil (40, 41) der Trennlinie (39c) des zweiten Magneten als Mitte zugewandt ist.

11. Optische Plattenvorrichtung zur Aufzeichnung und/oder Wiedergabe einer optischen Platte, umfassend eine Antriebseinrichtung für einen Drehantrieb der optischen Platte, eine Lichtquelle zur Abstrahlung von Laserlicht,
eine Objektivlinse zur Abstrahlung des von der genannten Lichtquelle abgestrahlten Laserlichts an die genannte optische Platte,
eine biaxiale Betätigungsvorrichtung zum beweglichen Tragen der genannten Objektivlinse in der Fokussierungsrichtung und in der Spurnachlaufrichtung,
eine Fotodetektoreinrichtung zur Ermittlung des an die optische Platte abgestrahlten und von dieser reflektierten Rückkehr-Laserlichts,
eine Servoeinrichtung zur Verschiebung der durch die biaxiale Betätigungsvorrichtung getragenen Objektivlinse in der Fokussierungsrichtung und in der Spurnachlaufrichtung auf der Grundlage eines Detektiersignals von der genannten Fotodetektoreinrichtung her,
und eine Bewegungseinrichtung zur Bewegung bzw. Verschiebung der betreffenden biaxialen Betätigungsvorrichtung längs des Radius der optischen Platte,
wobei die genannte biaxiale Betätigungsvorrichtung eine biaxiale Betätigungsvorrichtung nach irgendeinem der Ansprüche 1 bis 10 ist und wobei die genannten Objektivlinsen selektiv in die optische Bahn des Laserlichts bewegt werden.

12. Optische Plattenvorrichtung nach Anspruch 11, umfassend ferner eine Diskriminierungs- bzw. Unterscheidungseinrichtung (63) für eine Unterscheidung der Plattensorten zum Umschalten zwischen den Objektivlinsen (26a, 26b) zur Auswahl der Objektivlinse im Gebrauch in Abhängigkeit von einem Diskriminierungs- bzw. Unterscheidungssignal von der genannten Diskriminierungs- bzw. Unterscheidungseinrichtung.

## Revendications

1. Actionneur biaxial comprenant :
un arbre de support (32) prévu sur une plaque de base (31) perpendiculairement à une surface d'enregistrement du signal d'un support d'enregistrement;
un porte-lentilles (33) supporté de manière à glisser le long dudit arbre de support et à tourner autour de ce dernier;
une bobine de focalisation (34) montée sur ledit porte-lentilles pour entraîner ledit porte-lentilles dans la direction de focalisation;
une bobine de suivi (35) montée sur ledit porte-lentilles de manière à entraîner ledit porte-lentilles dans la direction de suivi; et
des moyens (36-39) de production de magnétisme prévus sur ladite plaque de base, lesdits moyens de production de magnétisme étant agencés de manière à être tournés vers ladite bobine de focalisation et ladite bobine de suivi;
caractérisé en ce que :
une pluralité de lentilles d'objectif (26a,26b) sont prévues sur ledit porte-lentilles;
ledit porte-lentilles (33) comprend une partie allongée (102), la distance entre les extrémités (102a,102b) de ladite partie allongée et ladite table de support (32) étant supérieure à la distance entre les parties latérales du porte-lentilles et l'arbre de support (32); et
ladite bobine de suivi (35) est située sur la portion d'extrémité de ladite partie allongée du porte-lentilles.

2. Actionneur biaxial selon la revendication 1, dans lequel lesdits moyens de production d'un magnétisme incluent un aimant (39) disposé en face de la bobine de suivi (35) et possédant une partie de surface courbe tournée vers ladite bobine de suivi (35).

3. Actionneur biaxial selon la revendication 2, dans lequel ledit porte-lentilles possède au moins deux éléments magnétiques (40,41) au voisinage de ladite bobine de suivi (35), de manière qu'ils soient attirés par ledit aimant (39).

4. Actionneur biaxial selon la revendication 2 ou 3, dans lequel une pluralité de positions neutres sont prévues en rapport avec le sens de rotation du porte-lentilles (33), en association avec les positions de fonctionnement, dans lesquelles les lentilles d'objectif respectives sont insérées dans le trajet optique, les positions neutres du porte-lentilles sont commutées sous l'effet de l'interaction de la bobine de suivi (35) et de l'aimant (39), et dans lequel lesdites lentilles d'objectif sont adaptées pour être insérées sélectivement dans le trajet optique d'un faisceau laser.

5. Actionneur biaxial selon les revendications 2, 3 ou 4, dans lequel l'aimant (39) est aimanté de manière à former des pôles S et N alternés (39a,39b).

6. Actionneur biaxial selon l'une quelconque des revendications précédentes, dans lequel au moins un couple de lentilles d'objectif (26a,26b), dont les ouvertures numériques ont des valeurs différentes, sont montées sur ledit porte-lentilles (33), lesdites lentilles d'objectif (26a,26b) sont disposées dans des positions angulaires différentes sur un cercle concentrique par rapport audit arbre de support (32), et dans lequel les lentilles d'objectif sont disposées sélectivement dans un trajet optique de la lumière laser.

7. Actionneur biaxial selon l'une quelconque des revendications précédentes, dans lequel lesdits moyens de production de magnétisme incluent un autre aimant (37) disposé en face de la bobine de focalisation (34).

8. Actionneur biaxial selon l'une quelconque des revendications précédentes, dans lequel le porte-lentilles (33) comprend une partie formant bride (102) constituant ladite partie allongée, et une surface cylindrique (101) prévue pour le montage de la bobine de focalisation (34), ladite partie formant bride ayant une surface supérieure (102c) pour le montage desdites lentilles d'objectif (26a,26b) et une surface latérale (102a,102b) pour le montage de ladite bobine de suivi (35).

9. Actionneur biaxial selon l'une quelconque des revendications précédentes, dans lequel :
le porte-lentilles (33) possède une première partie (102c) située en face du support d'enregistrement et adaptée pour la mise en place de la pluralité de lentilles d'objectif (26a,26b), une seconde partie (101) pour le montage de la bobine de focalisation (34), et une troisième partie (102a,102b) pour le montage de la bobine de suivi (35);
une pluralité desdites lentilles d'objectif sont montées sur ladite première partie (102c) à la même distance dudit arbre de support (32);
ladite bobine de focalisation (34) est montée sur ladite seconde partie (101) du porte-lentilles pour entraîner le porte-lentilles dans la direction de focalisation;
ladite bobine de suivi (35) est montée sur ladite troisième partie (102a,102b) du porte-lentilles pour entraîner le porte-lentilles dans la direction de suivi;
un aimant (39) est monté sur ladite plaque de base (31) de manière à être disposé en vis-à-vis de ladite bobine de suivi (35);
un autre aimant (37) est monté sur ladite plaque de base pour être disposé en vis-à-vis de ladite bobine de focalisation (34); et
lesdites lentilles d'objectif (26a,26b) disposées sur ledit porte-lentilles sont adaptées pour être insérées alternativement dans le trajet optique d'un faisceau laser.

10. Actionneur biaxial selon la revendication 9, dans lequel une pièce magnétique (40,41) est disposée au voisinage de la bobine de suivi montée sur ledit porte-lentille, ledit aimant (39) est subdivisé par une ligne de subdivision (39c) parallèle audit arbre de support de manière à être aimanté pour former des pôles S et N alternés, et dans lequel le porte-lentilles est retenu autour d'une position dans laquelle la pièce magnétique (40,41) est située en vis-à-vis de la ligne de subdivision (39c) du second aimant, en tant que centre.

11. Appareil à disque optique pour l'enregistrement et/ou la reproduction d'un disque optique, comprenant :
des moyens d'entraînement pour entraîner en rotation le disque optique;
une source de lumière pour émettre une lumière laser;
une lentille d'objectif servant à émettre la lumière laser émise par ladite source de lumière en direction dudit disque optique;
un actionneur biaxial servant à supporter, avec possibilité de déplacement, ladite lentille d'objectif dans la direction de focalisation et dans la direction de suivi;
des moyens formant photodétecteurs pour détecter la lumière laser renvoyée, émise en direction du disque optique et réfléchie par ce dernier;
des moyens d'asservissement pour déplacer la lentille d'objectif supportée par l'actionneur biaxial dans la direction de focalisation et dans la direction de suivi sur la base d'un signal de détection provenant desdits moyens formant photodétecteurs; et
des moyens de déplacement servant à déplacer ledit actionneur biaxial le long du rayon du disque optique;
dans lequel ledit actionneur biaxial est un actionneur biaxial selon l'une quelconque des revendications 1 à 10; et
lesdites lentilles d'objectif étant déplacées sélectivement dans le trajet optique de la lumière laser.

12. Appareil à disque optique selon la revendication 11, comprenant en outre des moyens de discrimination (63) pour discriminer les types de disques pour réaliser une commutation entre les lentilles d'objectif (26a,26b) pour sélectionner les lentilles d'objectif utilisées, en fonction d'un signal de discrimination délivré par lesdits moyens de discrimination.
